# EUROPÄISCHE PATENTANMELDUNG

(11) **EP 1 333 689 A1**
(43) Veröffentlichungstag der Anmeldung: **06.08.2003**
(21) Anmeldenummer: 02002561.5
(22) Anmeldetag: 04.02.2002
(51) Int. Cl.: H04Q 3/00, H04L 12/24

(54) **Routingverfahren und -system mit bedingtem Logging**

(71) Anmelder: SIEMENS AKTIENGESELLSCHAFT, 80333 München (DE)
(72) Erfinder: Meier, Herbert, 82538 Geretsried (DE); Tinnacher, Michael, 8580 Köflach (AT)

(57) **Zusammenfassung**

Die Erfindung betrifft ein Routingverfahren und -system für Meldungen (10) in einem Netzwerk (12), bei dem ein Forwarding Mechanismus (16) mit einem Logging Mechanismus (18) miteinander gekoppelt werden, so daß eine Meldung (10) nur dann in ein Log-File (20) des Logging Mechanismus (18) geschrieben wird, falls eine Zielinstanz (24) für die Meldung (10) nicht erreichbar ist.

## Beschreibung

Die Erfindung betrifft ein Routingverfahren und -system für Meldungen in einem Kommunikationsnetzwerk, die von einer Sendeinstanz an zumindest eine Zielinstanz weitergeleitet werden sollen und bei dem das Verfahren auf einen Logging Mechanismus zurückgreift, der zur Zwischenspeicherung der Meldungen in zumindest einem Log-File dient und/oder auf einen Forwarding Mechanismus zurückgreift, der eine netzwerkgültige Adressierung von zumindest einer Zielinstanz vorsieht und der die Weiterleitung von zumindest einer Meldung an eine Zielinstanz ausführt.

Die Erfindung bezieht sich insbesondere auf den fallweisen und damit bedingten Zugriff auf den Logging Mechanismus.

Systeme und Verfahren zum Weiterleiten von Meldungen in einem Kommunikationsnetzwerk, wie z.B. in einem Telekommunikationsnetz, der eingangs genannte Art dienen zur Überwachung und Steuerung des Netzes. Bei der Überwachung und Steuerung eine Netzwerkes für Telekommunikationsanwendungen findet u.a. das TMN Konzept (Telecommunications Management Network) seinen Einsatz, das wiederum auf dem OSI-Referenzmodell basiert. Letzteres ist eine abstrakte Beschreibung der Kommunikation zwischen offenen Systemen unter Einführung von hierarchischen und jeweils voneinander unabhängigen Schichten. Das TMN stellt neben Mitteln zum Transport und zur Verarbeitung von Informationen auch solche zum Management von Netzen und Diensten bereit. Dabei ist insbesondere die Weiterleitung von bestimmten Meldungen von Interesse, wie beispielsweise von Synchronisationsevents oder Daten, die sich auf Messungen beziehen, Alarm- und Warnmeldungen oder von Meldungen, die die Auflösung eines kritischen Zustandes betreffen.

Bei der Verwaltung von soeben beschriebenen Netzwerken ist es notwendig, bestimmte Meldungen bzw. Ereignisse durch das Netzwerk zu routen, d.h. diese von einer Sendeinstanz an eine Zielinstanz weiterzuleiten. Diese Meldungen beziehen sich vorwiegend auf die Überwachung und/oder die Verwaltung des Netzwerkes.

Innerhalb der TMN Netzwerkkonzeptes bestehen nun zwei grundlegende Mechanismen für das Routen von Meldungen bzw. Netzwerk-Ereignissen: zum einen der sogenannte Forwarding Mechanismus und zum anderen der sogenannte Logging Mechanismus. Beide Mechanismen sind jedoch bisher funktional vollständig voneinander getrennt.

Der Forwarding Mechanismus dient dazu, OSI Applikationen auf unterschiedlichen Systemen adressierbar zu machen, damit sie bestimmte Meldungen empfangen können. Ist eine primäre Adresse nicht erreichbar, so kann eine zweite Adresse hilfsweise angegeben werden, die dann zur Zielinstanz wird, falls die primäre Adresse nicht erreichbar ist. Im Fehlerfall führt dieser Mechanismus - alleine angewandt - allerdings zum Verlust der Meldung. Aus diesem Grund findet zusätzlich der Logging Mechanismus Anwendung.

Der Logging Mechanismus umfaßt das Anlegen von sogenannten Log-Files, in denen die Meldungen zumindest temporär zwischen gespeichert werden. Die Log-Files liegen lokal auf dem System, das die jeweilige Meldung herausgegeben hat. Ein Weiterleiten der Meldungen des Log-Files an Applikationen ist hier allerdings nicht vorgesehen.

Da, wie oben bereits erwähnt, beide Mechanismen bei den bisherigen Verfahren im Stand der Technik funktional voneinander entkopppelt waren, war es bisher nicht möglich, Informationen bzw. Daten, die sich bei Abarbeitung des einen Mechanismus ergeben haben bei dem anderen Mechanismus anzuwenden. Dies führt zu erheblichen Verlusten, die sich vor allem hinsichtlich der Performance negativ auswirken.

Um beispielsweise sicherzustellen, daß zu sendende, verwaltungsbezogenen Meldungen nicht untergehen, wenn ein Netzwerkproblem auftritt oder die Zielinstanz bzw. der Empfänger der Meldung nicht verfügbar ist, werden bei bisherigen Systemen nach dem Stand der Technik alle Meldungen stets parallel geloggt. In allen Fällen, in denen die Meldung jedoch an die Zielinstanz weitergeleitet werden kann, ist das parallele Loggen eigentlich überflüssig. Ein solches - teilweise redundantes - Vorgehen erfordert erhöhte Ressourcen und bringt deshalb den Nachteil mit sich, daß zusätzlicher Speicherplatz und zusätzliche CPU-Zeit bereit gestellt werden muß.

In diesem Zusammenhang zeigt beispielsweise die WO 99/31892 ein System zum Forwarding und Logging von digitalen Meldungen in einem Telekommunikationsnetzwerk. Dieses System verwendet ebenfalls Log-Files für die eingehenden Meldungen, die dann weiter verarbeitet werden. Ein wesentlicher Unterschied zu dem erfindungsgemäßen System liegt jedoch darin, daß jede Meldung, die an ein Management System gesendet wird, ebenfalls parallel geloggt wird. Der Logging Mechanismus ist also in allen Fällen aktiv und damit nachteiligerweise auch in den Fällen, in denen ein Logging nicht notwendig ist.

Die Verfügbarkeit dieser Meldungen auf der einen Seite und der Durchsatz bzw. die Performance des Managementsystems auf der anderen Seite stehen dabei in einem reziproken Verhältnis und sind die kritischen Größen.

Es ist deshalb Aufgabe der Erfindung, einen Weg aufzuzeigen, mit dem sichergestellt werden kann, daß Meldungen, die nicht an die Zielinstanz geroutet werden können (beispielsweise aufgrund eines Netzwerkfehlers) nicht verloren gehen, ohne daß dadurch die Performance des Managementsystems verringert wird.

Die Aufgabe wird durch die Merkmale der Erfindung gelöst, insbesondere durch ein Routingverfahren der eingangs genannten Art, bei dem der Zugriff auf den Logging Mechanismus nur fallweise erfolgt, vorzugsweise dann, wenn eine Weiterleitung der Meldung an zumindest eine der entsprechenden Zielinstanzen nicht möglich ist und/oder wenn der Forwarding Mechanismus nicht erfolgreich ausgeführt werden konnte, indem der Logging Mechanismus derart erweitert und mit dem Forwarding Mechanismus gekoppelt wird, daß dem Log-File des Logging Mechanismus optional eine netzwerkgültige Adresse zugewiesen wird, die innerhalb des Forwarding Mechanismus adressierbar ist.

Eine Aufgabenlösung gemäß Anspruch 11 besteht in einem Routingsystem für Meldungen in einem Kommunikationsnetzwerk, die von einer Sendeinstanz an zumindest eine Zielinstanz weitergeleitet werden sollen, mit:
- einer Logging Einheit, die zur Zwischenspeicherung der Meldungen in zumindest einem Log-File dient,
- einer Forwarding Einheit, die eine netzwerkgültige Adressierung von zumindest einer Zielinstanz vorsieht und die die Weiterleitung von zumindest einer Meldung an eine Zielinstanz ausführt,
dadurch gekennzeichnet, daß
die Logging Einheit fallweise und vorzugsweise nur dann eingesetzt wird, falls die Forwarding Einheit nicht erfolgreich arbeitet und/oder falls die Meldung nicht an zumindest eine der entsprechenden Zielinstanzen weitergeleitet werden kann, indem die Logging Einheit derart erweitert und mit der Forwarding Einheit gekoppelt wird, daß dem Log-File der Logging Einheit optional eine netzwerkgültige Adresse zugewiesen wird, die innerhalb der Forwarding Einheit adressierbar ist.

Ein Beispiel für ein erfindungsgemäßes Routingverfahren bezieht sich auf das TMN Netzwerk nach den ITU Empfehlungen der Reihe X.73x, bei dem der Forwarding Mechanismus (Event Forwarding) und ein modifizierter Logging Mechanismus (Log Control Funktion) gekoppelt worden sind.

Der Logging Mechanismus wird erweitert, indem den Log-Files des Logging Mechanismus OSI-Adressen (Open Systems Interconnection, OSI) zugewiesen werden, die zugleich von dem Forwarding Mechanismus adressierbar und damit verarbeitbar sind. Dadurch wird es möglich, auf den Logging Mechanismus nur in den Fällen zurückzugreifen, in denen eine Weiterleitung der Meldung an die Zielinstanz nicht möglich ist (etwa, da der Forwarding Mechanismus aufgrund eines allgemeinen Netzwerkfehlers nicht erfolgreich ausgeführt werden konnte). Die Erfindung sieht demnach ein fallspezifisches, bedingtes automatisches Logging vor, das die Performance des Managementsystems deutlich verbessert.

Die erfindungsgemäße Zuweisung einer OSI-Adresse an ein Log-File ermöglicht es, daß die Event Forwarding Function Meldungen an ein lokales Logsystem sendet, falls die entfernt liegenden Applikationen nicht erreichbar sind. Dies ist beispielsweise bei einem allgemeinen Netzwerkfehler der Fall.

Als wesentlicher Vorteil ergibt sich eine erhöhte Sicherheit bei kritischen Ereignissen und eine erleichterte Verwaltung des Systems, da die Verknüpfung von lokalen Log-Inhalten und Ereignissen über dieselbe Verwaltung erfolgt, wie die Zuweisung zu entfernten Applikationen.

Erfindungsgemäß werden kritische Ereignisse nur dann einem Logging unterzogen, falls die entfernte Applikation nicht erreichbar ist. Dies führt zu einer markanten Verringerung der benötigten Rechnerkapazität und des notwendigen Speicherplatzes. Insgesamt können die erforderlichen Ressourcen vorteilhafterweise deutlich gesenkt werden.

Weiterhin ergibt sich eine vereinfachte Synchronisation zwischen der entfernten Applikation und dem Netzwerk Element, da ein Abgleich zwischen geloggten(d.h. im Log-File gespeicherten) Meldungen und von der Zielinstanz empfangenen Meldungen nicht mehr notwendig ist. Denn durch das erfindungsgemäße Vorgehen ist sichergestellt, daß die geloggten Ereignisse nicht von der Zielapplikation empfangen worden sind.

Ein weiterer Vorteil liegt darin, ein automatisches Logging zur Verfügung zu stellen, ohne daß die Belastung hinsichtlich der Ressourcen erhöht ist.

In alternativen Ausführungsformen der Erfindung ist es vorgesehen, die Meldungen in mehrere Log-Files zu schreiben. Dies ist insbesondere in den Fällen interessant, in denen unterschiedlichen Applikationen zumindest zum Teil auf die gleichen Meldungen zurückgreifen müssen. Diese Systeme können sich dann die jeweils relevanten Meldungen aktiv abholen.

In der bevorzugten Ausführungsform der Erfindung liegt das Log-File lokal auf dem System, das die jeweilige Meldung herausgibt. Das hat den Vorteil, daß selbst ein Netzwerkfehler bei dem Loggen der Meldung keinen fehlerhaften Einfluß ausüben kann. Damit wird sichergestellt, daß auch im Falle eines fehlerhaften Übertragungswegs - z.B. aufgrund eines Netzausfalls - die jeweiligen Events erfaßt werden können und nicht verlorengehen.

Die vorstehend beschriebenen, erfindungsgemäßen Ausführungsformen des Verfahren können auch als Computerprogrammprodukt ausgebildet sein, mit einem von einem Computer lesbaren Medium und mit Computerprogramm-Code-Mitteln und bei dem der Computer nach Laden des Computerprogramms zur Durchführung des oben beschriebenen, erfindungsgemäßen Verfahrens veranlaßt wird.

Eine alternative Aufgabenlösung sieht ein Speichermedium vor, das zur Speicherung des vorstehend beschriebenen, computerimplementierten Verfahrens bestimmt ist und von einem Computer lesbar ist.

Zusätzliche, vorteilhafte Ausführungsformen ergeben sich aus den Unteransprüchen.

In der folgenden detaillierten Figurenbeschreibung werden nicht einschränkend zu verstehende Ausführungsbeispiele mit deren Merkmalen und weiteren Vorteilen anhand der Zeichnung besprochen. In dieser zeigen:
- Figur 1: eine Übersicht über das erfindungsgemäße Routingverfahren,
- Figur 2: wesentliche Prozesse bei einer erfindungsgemäßen Verarbeitung von Meldungen.

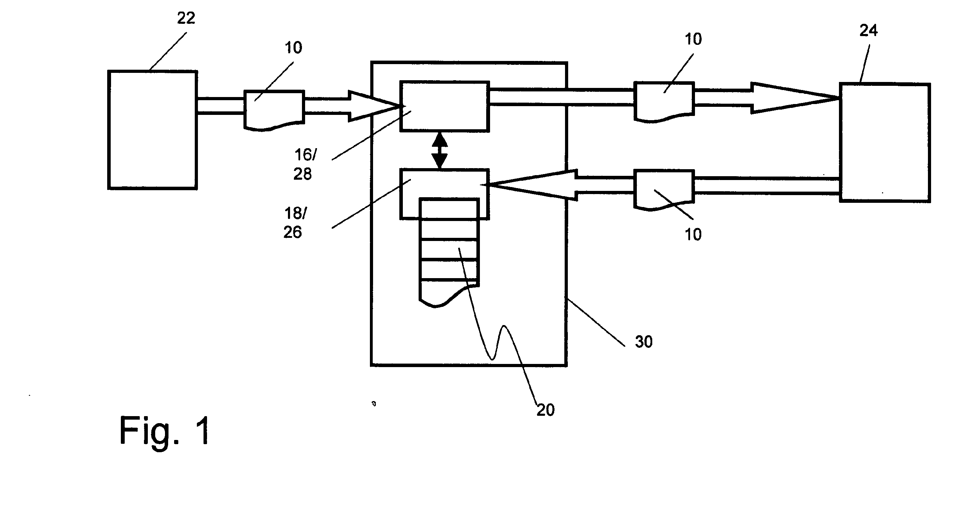

Wie in Figur 1 gezeigt, betrifft die Erfindung die Weiterleitung von Meldungen 10 in einem Kommunikationsnetzwerk 12. Dabei werden die Meldungen 10 zwischen unterschiedlichen Applikationen 14 ausgetauscht, die sich teilweise auf unterschiedlichen Systemen befinden können.

Die Meldungen 10 beziehen sich im wesentlichen auf die Überwachung und Verwaltung des Netzwerkes 12, so daß sichergestellt werden muß, daß die Meldungen 10 auch in einem Fehlerfalle nicht verloren gehen, sondern zwischen gespeichert werden, um dann zu einem späteren Zeitpunkt wieder abrufbar zu sein.

In der bevorzugten Ausführungsform der Erfindung handelt es sich bei dem Netzwerk 12 um ein TMN-Netzwerk nach den ITU-Empfehlungen der Serie X.700. Hier sind zwei bisher Mechanismen für das Routing der Meldungen 10 vorgesehen:
1. ein Forwarding Mechanismus 16, das sogenannte Event Forwarding (nach X.733) und
2. ein Logging Mechanismus 18, die sogenannte Log Control Function (nach X.734).

Der Forwarding Mechanismus 16 erfüllt die Aufgabe, Events im Netzwerk 12 an andere System zu routen.

Der Logging Mechanismus 18 hat die Funktion, Events im Netzelement zu loggen, das heißt in einen Speicher oder Zwischenspeicher - ein sogenanntes Log-File 20 - einzuschreiben und damit sicherzustellen, daß sie nicht verloren gehen. Die Events können damit zu einem späteren Zeitpunkt von anderen Systemen aktiv abgeholt werden.

Beide Bausteine werden erfindungsgemäß funktional miteinander gekoppelt, so daß Daten bzw. Ergebnisse des einen Verfahrens bei dem anderen Verfahren zur Verfügung stehen bzw. verarbeitet werden können und ein wechselseitger Funktionsaufruf möglich wird.

Dies wird erreicht, indem der Logging Mechanismus 18 erweitert wird. Die Erweiterung bezieht sich auf die Zuweisung einer OSI-Adresse an das Log-File 20.
Der Forwarding Mechanismus 16 ist so ausgelegt, daß als Haupt- oder Nebenziel nicht wie üblich eine Applikation sondern eine Log Control Function bzw. ein bestimmtes Log-File 20 angegeben wird. Innerhalb des Forwarding Mechanismus 16 ist nunmehr das Log-File 20 adressier- und verarbeitbar. Dies ermöglicht nun folgendes Vorgehen:

Soll eine Meldung 10 von einer Sendeinstanz 22 an eine Zielinstanz bzw. Zielapplikation 24 gesendet werden, die zur Zeit nicht erreichbar ist, z.B. aufgrund eines Netzwerkfehlers, dann läuft der Forwarding Mechanismus 16 auf einen Fehler, da die aktuelle Adresse dieser Zielapplikation 24 ungültig ist.

Um nun zu verhindern, daß die Meldung 10 nicht gelöscht wird, ist in diesem Fall innerhalb des Forwarding Mechanismus 16 die OSI-Adresse des Log-Files 20 angegeben. Das hat zum Ergebnis, daß die Meldung 10 nun an die Adresse des Log-Files 20 gesendet wird bzw. in das Log-File 20 geloggt und zwischen gespeichert wird.

Bei einem sehr hohen Meldungsaufkommen innerhalb des Netzwerkes 12 ist es offensichtlich, daß ein generelles Loggen aller Meldungen 10 (wie es im Stand der Technik erfolgt) mit einer untragbaren Ressourcenbelastung einhergeht.

Erfindungsgemäß wird deshalb ein Loggen von Meldungen 10 einerseits automatisch und andererseits nur noch bedingt ausgeführt, das heißt unter bestimmten Voraussetzungen: Der Logging Mechanismus 18 wird erfindungsgemäß nur dann automatisch aktiviert, falls der Forwarding Mechanismus 16 die Meldung 10 nicht an die vorgesehene Zielapplikation 24 weiterleiten konnte.

Aufgrund der erfindungsgemäßen Verarbeitung und aufgrund der Netzwerktopologie ist sichergestellt, daß eine geloggte Meldung 10 nicht von der jeweiligen Zielapplikation 24 empfangen worden ist. Damit können Redundanzen sicher ausgeschlossen werden.

Ist die angegebene primäre oder alternative Zielapplikation 24 nicht erreichbar, wird die Meldung 10 in das Log-File 20 eingetragen. Die Zielapplikation 24 kann sich dann selbst die entsprechende Meldung 10 aktiv abholen. Dies erfolgt entweder zyklisch, in periodischen Zeitabständen oder grundsätzlich nach einem Netzwerkfehler, wie beispielsweise nach einem Netzwerkausfall.

Die separaten Q3 Objekt Modelle des Forwarding Mechanismus 16 und des Logging Mechanismus 18 werden miteinander verbunden, indem einer Q3-Log-Instanz optional eine OSI-Applikationsadresse zugewiesen wird.

Die Erfindung bezieht sich ebenfalls auf ein Routingsystem für die Meldungen 10 im Netzwerk 12. Das Routingsystem umfaßt eine Logging-Einheit 26, eine Forwarding-Einheit 28 und in der bevorzugten Ausführungsform eine Administrationseinheit 30, die zur Steuerung und/oder Verwaltung der Logging-Einheit 26 und der Forwarding-Einheit 28 bestimmt ist.

In der Administrationseinheit wird u.a. festgelegt, in welchen Zeitspannen der Logging Mechanismus 18 aktiviert oder ob er kontinuierlich aktiv sein soll.

Weiterhin umfaßt die Administrationseinheit 30 Prozesse, die den Austausch von Meldungen 10 zwischen dem Logging Mechanismus 18 bzw. dem Forwarding Mechanismus 16 einerseits und der Zielapplikation 24 andererseits steuern. Diese Prozesse betreffen beispielsweise die Bedingungen für das Auslesen der Meldungen 10 aus dem Log-File 20. Hier kann z.B. eine Zugriffsberechtigung der Zielapplikation 24 überprüft oder überwacht werden, ob die Zielapplikation unmittelbar auf das Log-File 20 zugreifen kann oder mittelbar über den Forwarding Mechanismus 16.

Die Administrationseinheit 30 umfaßt auch eine Diskriminatoreinheit, die zwischen den Fällen unterscheidet:
'Meldung 10 kann erfolgreich an Zielapplikation 24 geroutet werden ' und
'Meldung 10 kann nicht erfolgreich an Zielapplikation 24 geroutet werden '.

Aufgrund der erfindungsgemäßen Erweiterung des Forwarding und des Logging Modells und der Verknüpfung beider Modelle, die zu einer synergetischen Wirkung führt, liegt ein besonderer Vorteil weiterhin darin, daß Events nun nicht nur an Applikationen sondern auch an andere Prozeduren (an die Log Control Function) gesendet werden können.

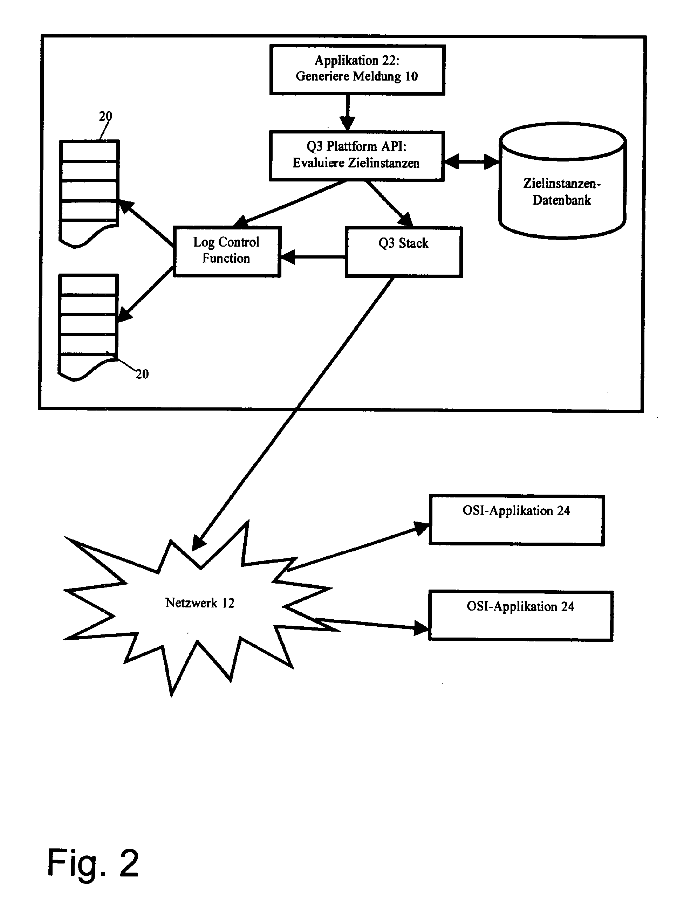

Unter Bezugnahme zu Figur 2 wird nun der erfindungsgemäße Ablauf des Verfahrens erläutert:
Sobald die Applikation eine Meldung 10 herausgibt wird in der bevorzugten Ausführungsform die Zielinstanz für diese Meldung 10 durch Zugriff auf die interne Datenbank evaluiert. In dieser Datenbank sind die Logging-Zielinstanzen und die OSI-Applikationen bereits beide als Einträge enthalten.

Als Ergebnis der Auswertung entstehen dann zwei Tabellen: eine Log-Tabelle, die angibt, wo die Meldung 10 geloggt werden soll und eine OSI-Applikations-Tabelle, die Daten über die primären und alternativen Zielinstanzen der OSI-Applikationen des Forwarding Mechanismus 16 bereitstellt.

Hat die Log-Tabelle zumindest einen Eintrag, so wird die Meldung 10 zusammen mit der Log-Tabelle weitergeleitet und veranlaßt, daß die Meldung 10 in alle ausgewerteten Logs eingeschrieben wird.

Hat die OSI-Applikations-Tabelle eine Eintrag, so wird die Meldung 10 zusammen mit dieser Tabelle an den Q3-Stack weitergeleitet, der daraufhin versucht, die Meldung 10 an die Adressen zu versenden, die als primäre Adresse angegeben worden sind. Bleibt dieser Versuch erfolglos, dann wird die Meldung 10 an die alternativen Adressen bzw. Zielinstanzen gesendet. Hier greift der wesentliche Vorteil der Erfindung ein, denn innerhalb der OSI-Tabelle können nun auch Logs als Einträge bestimmt werden, die damit über die interne Log Control Function erreichbar werden.

## Patentansprüche

1. Routingverfahren für Meldungen (10) in einem Kommunikationsnetzwerk (12), die von einer Sendeinstanz an zumindest eine Zielinstanz (24) weitergeleitet werden sollen und bei dem das Verfahren auf einen Logging Mechanismus (18) zurückgreift, der zur Zwischenspeicherung der Meldungen in zumindest einem Log-File (20) dient und/oder auf einen Forwarding Mechanismus (16) zurückgreift, der eine netzwerkgültige Adressierung von zumindest einer Zielinstanz (24) vorsieht und der die Weiterleitung von zumindest einer Meldung (10) an eine Zielinstanz (24) ausführt,
**dadurch gekennzeichnet, daß**
der Zugriff auf den Logging Mechanismus (18) nur fallweise erfolgt, vorzugsweise dann, wenn eine Weiterleitung der Meldung (10) an zumindest eine der entsprechenden Zielinstanzen (24) nicht möglich ist, indem der Logging Mechanismus (18) derart erweitert und mit dem Forwarding Mechanismus (16) gekoppelt wird, daß dem Log-File (20) des Logging Mechanismus (18) optional eine netzwerkgültige Adresse zugewiesen wird, die innerhalb des Forwarding Mechanismus (16) adressierbar ist.

2. Verfahren nach Anspruch 1,
**dadurch gekennzeichnet, daß**
die Sendeinstanz und die Zielinstanz (24) verschiedenen und/oder unabhängigen Systemen angehören.

3. Verfahren nach mindestens einem der vorstehenden Ansprüche,
**dadurch gekennzeichnet, daß**
die Sendeinstanz und die Zielinstanz (24) OSI-Applikationen sind und die netzwerkgültige Adresse, die dem Log-File (20) zugewiesen wird eine OSI-Adresse ist.

4. Verfahren nach mindestens einem der vorstehenden Ansprüche,
**dadurch gekennzeichnet, daß**
der Logging Mechanismus (18) ein oder mehrere Log-File(s) (20) umfaßt.

5. Verfahren nach mindestens einem der vorstehenden Ansprüche,
**dadurch gekennzeichnet, daß**
der Zugriff auf den Logging Mechanismus (18) automatisch erfolgt, indem eine Meldung (10) und nur diese Meldung (10), die nicht an die Zielinstanz (24) weitergeleitet werden kann, automatisch geloggt wird.

6. Verfahren nach mindestens einem der vorstehenden Ansprüche,
**dadurch gekennzeichnet, daß**
die Meldungen (10) die Überwachung und/oder die Verwaltung des Netzwerkes betreffen, und vorzugsweise Alarme und/oder Synchronisationsevents und/oder Netzwerkverwaltungsdaten sind.

7. Verfahren nach mindestens einem der vorstehenden Ansprüche,
**dadurch gekennzeichnet, daß**
das Log-File (20) als temporärer Zwischenspeicher für Meldungen (10) organisiert ist.

8. Verfahren nach mindestens einem der vorstehenden Ansprüche,
**dadurch gekennzeichnet, daß**
die Zuweisung der netzwerkgültigen Adresse an das Log-File (20) über dieselben Verwaltungsroutinen erfolgt, wie die Zuweisung für die entfernt liegenden Applikationen.

9. Verfahren nach mindestens einem der vorstehenden Ansprüche,
**dadurch gekennzeichnet, daß**
das Log-File (20) lokal ist oder über eine sichere Netzwerktopologie angeschlossen ist.

10. Verfahren nach mindestens einem der vorstehenden Ansprüche,
**dadurch gekennzeichnet, daß**
das Management des Kommunikationsnetzwerkes nach TMN-ITU Richtlinien erfolgt.

11. Routingsystem für Meldungen (10) in einem Kommunikationsnetzwerk (12), die von einer Sendeinstanz an zumindest eine Zielinstanz (24) weitergeleitet werden sollen, mit:
- einer Logging Einheit (26), die zur Zwischenspeicherung der Meldungen (10) in zumindest einem Log-File (20) dient,
- einer Forwarding Einheit (28), die eine netzwerkgültige Adressierung von zumindest einer Zielinstanz (24) vorsieht und die die Weiterleitung von zumindest einer Meldung (10) an eine Zielinstanz (24) ausführt,
**dadurch gekennzeichnet, daß**
die Logging Einheit (26) fallweise und vorzugsweise nur dann eingesetzt wird, falls die Meldung (10) nicht an zumindest eine der entsprechenden Zielinstanzen (24) weitergeleitet werden kann, indem die Logging Einheit (26) derart erweitert und mit der Forwarding Einheit (28) gekoppelt wird, daß dem Log-File (20) der Logging Einheit (26) optional eine netzwerkgültige Adresse zugewiesen wird, die innerhalb der Forwarding Einheit (28) adressierbar ist.

12. Routingsystem nach Anspruch 11,
**dadurch gekennzeichnet, daß**
das Log-File (20) der Logging Einheit (26) lokal in Bezug zu der Sendeinstanz liegt.

13. Routingsystem nach mindestens einem der Ansprüche 11 oder 12,
**dadurch gekennzeichnet, daß**
das Routingsystem weiterhin eine Administrationseinheit (30) aufweist, die zur Verwaltung des Kommunikationsnetzwerkes (12) und vorzugsweise zur Verwaltung der Logging Einheit (26) und der Forwarding Einheit (28) bestimmt ist.

14. Routingsystem nach Anspruch 13,
**dadurch gekennzeichnet, daß**
der Einsatz der Logging Einheit (26) von der Administrationseinheit (30) automatisch gesteuert wird.

15. Routingverfahren für Meldungen (10) in einem Kommunikationsnetzwerk (12), die von einer Sendeinstanz an zumindest eine Zielinstanz (24) mittels eines Forwarding Mechanismus (16) weitergeleitet werden sollen, der eine netzwerkgültige Adressierung von zumindest einer Zielinstanz (24) vorsieht und die Meldungen (10) an diese zumindest eine Zielinstanz (24) weiterleitet,
**dadurch gekennzeichnet,**
**daß** immer dann, wenn eine Weiterleitung einer der Meldungen (10) an zumindest eine der Zielinstanzen (24) nicht möglich ist, diese Meldung (10) mittels eines Logging Mechanismus (18), der zur Zwischenspeicherung von Meldungen in zumindest einem Log-File (20) dient, zwischengespeichert wird.
